(19) Europäisches Patentamt / European Patent Office / Office européen des brevets

(11) **EP 3 764 443 B1**

(12) **EUROPÄISCHE PATENTSCHRIFT**

(45) Veröffentlichungstag und Bekanntmachung des Hinweises auf die Patenterteilung:
**19.10.2022 Patentblatt 2022/42**

(21) Anmeldenummer: **19185574.1**

(22) Anmeldetag: **10.07.2019**

(51) Internationale Patentklassifikation (IPC):
*C25B 1/04* (2021.01)   *H01M 4/90* (2006.01)
*H01M 4/92* (2006.01)   *C25B 9/73* (2021.01)
*C25B 11/057* (2021.01)   *C25B 11/091* (2021.01)

(52) Gemeinsame Patentklassifikation (CPC):
**H01M 4/9016; C25B 1/04; C25B 9/73; C25B 11/057; C25B 11/091; H01M 4/9075; H01M 4/923; H01M 4/925;** H01M 4/921; H01M 4/926; H01M 2008/1095; Y02E 60/36; Y02E 60/50

(54) **KATALYSATOR FÜR DIE SAUERSTOFFENTWICKLUNGSREAKTION BEI DER WASSERELEKTROLYSE**

CATALYST FOR OXYGEN EVOLUTION REACTION IN THE ELECTROLYSIS OF WATER

CATALYSEUR POUR LA RÉACTION DE DÉGAGEMENT D'OXYGÈNE LORS DE L'ÉLECTROLYSE DE L'EAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.01.2021 Patentblatt 2021/02**

(73) Patentinhaber: **Heraeus Deutschland GmbH & Co. KG**
**63450 Hanau (DE)**

(72) Erfinder:
• **Kemmer, Martina**
 **63450 Hanau (DE)**
• **Gebauer, Christian**
 **63450 Hanau (DE)**

(74) Vertreter: **Haggenmüller, Christian**
**Maiwald Patentanwalts- und Rechtsanwaltsgesellschaft mbH**
**Elisenhof**
**Elisenstraße 3**
**80335 München (DE)**

(56) Entgegenhaltungen:
EP-A2- 2 575 202   WO-A1-2018/077857
DE-A1-102017 114 030   DE-T5-112010 005 334
US-A1- 2011 081 599   US-A1- 2011 223 523

**Beschreibung**

Die vorliegende Erfindung betrifft die Herstellung einer Katalysatorzusammensetzung, die als Katalysator bei der Wasserelektrolyse (insbesondere für die Sauerstoffentwicklungsreaktion an der Anode) oder als Katalysator für eine Brennstoffzelle (z.B. in Kombination mit auf Kohlenstoff geträgerten Pt- oder Pdhaltigen Katalysatoren) verwendbar ist.

Wasserstoff wird als Energieträger der Zukunft angesehen, da es eine nachhaltige Energiespeicherung ermöglicht, langfristig verfügbar ist und auch mit regenerativen Energietechnologien herstellbar ist.

Derzeit ist die Dampfreformierung das gebräuchlichste Verfahren zur Herstellung von Wasserstoff. Bei der Dampfreformierung werden Methan und Wasserdampf zu Wasserstoff und CO umgesetzt.

Die Wasserelektrolyse stellt eine weitere Variante der Wasserstoffherstellung dar. Über die Wasserelektrolyse kann Wasserstoff in hoher Reinheit erhalten werden.

Es gibt verschiedene Methoden der Wasserelektrolyse, insbesondere eine alkalische Wasserelektrolyse, eine saure Wasserelektrolyse unter Verwendung einer Polymerelektrolytmembran (*"PEM";* PEM-Wasserelektrolyse) und eine Hochtemperatur-Feststoffoxid-Elektrolyse.

Eine Wasserelektrolysezelle enthält eine Halbzelle mit einer Elektrode, an der die Sauerstoffentwicklungsreaktion (englisch: *"oxygen evolution reaction", "OER"*) stattfindet, sowie eine weitere Halbzelle mit einer Elektrode, an der die Wasserstoffentwicklungsreaktion (englisch: *"hydrogen evolution reaction" "HER"*) stattfindet. Die Elektrode, an der die Sauerstoffentwicklungsreaktion stattfindet, wird als Anode bezeichnet.

Eine Übersicht zur Technologie der Wasserelektrolyse, insbesondere der PEM-Wasserelektrolyse, findet sich beispielsweise bei M. Carmo et al., International Journal of Hydrogen Energy, 38, 2013, S. 4901-4934; und V. Himabindu et al., Materials Science for Energy Technologies, 2, 2019, S. 442-454.

Bei einer Polymerelektrolytmembran-Wasserelektrolysezelle (nachfolgend auch als PEM-Wasserelektrolysezelle bezeichnet) fungiert die Polymermembran als Protonentransportmedium und isoliert die Elektroden elektrisch voneinander.

Die an der Anode einer PEM-Wasserelektrolysezelle ablaufende Sauerstoffentwicklungsreaktion lässt sich durch folgende Reaktionsgleichung wiedergeben:

$$2\ H_2O \rightarrow 4\ H^+ + O_2 + 4\ e^-$$

Aufgrund ihres komplexen Reaktionsmechanismus weist die Sauerstoffentwicklungsreaktion eine langsame Reaktionskinetik auf, weshalb ein signifikantes Überpotential an der Anode benötigt wird, um ausreichend hohe Umsatzraten zu erzielen.

Der effiziente Betrieb einer Wasserelektrolysezelle erfordert die Anwesenheit von Katalysatoren. Um die Sauerstoffentwicklungsreaktion an der Anode einer PEM-Wasserelektrolysezelle zu katalysieren, kommen insbesondere Iridium, Iridiumoxide, Rutheniumoxide oder Ir-Ru-Mischoxide zum Einsatz. Die katalytisch wirksamen Materialien können optional auf einem Trägermaterial vorliegen (z.B. in Form von Nanopartikeln oder dünner Filme), um so die spezifische Oberfläche des Katalysatormaterials zu erhöhen.

Eine Übersicht zu Katalysatoren für die Sauerstoffentwicklungsreaktion unter sauren Bedingungen (d.h. an der Anode einer PEM-Wasserelektrolysezelle) findet sich beispielsweise bei P. Strasser et al., Adv. Energy Mater., 7, 2017, 1601275; und F.M. Sapountzi et al., Progress in Energy and Combustion Science, 58, 2017, S. 1-35. Als eine Anforderung an Elektrokatalysatoren wird in der Publikation von F.M. Sapountzi et al. unter anderem eine möglichst hohe elektrische Leitfähigkeit genannt, so dass ein effizienter Elektronentransfer stattfinden kann.

Es gibt eine Reihe unterschiedlicher Verfahren, mit denen sich Iridium- und/oder Rutheniumoxide, optional in geträgerter Form auf einem Trägermaterial, herstellen lassen.

Eine mögliche Variante ist die nasschemische Fällung aus einem alkalischen wässrigen Medium, das eine Iridium-haltige Precursorverbindung enthält. Der gefällte Iridium-haltige Feststoff ist üblicherweise amorph und weist eine relativ geringe elektrische Leitfähigkeit auf. Durch Kalzinierung des gefällten Materials bei hoher Temperatur wird kristallines $IrO_2$ erhalten, das gegenüber amorphem Iridiumhydroxidoxid eine deutlich höhere elektrische Leitfähigkeit aufweist.

WO 2005/049199 A1 beschreibt ein Verfahren zur Herstellung einer Katalysatorzusammensetzung für die Wasserelektrolyse. In diesem Verfahren wird in einem wässrigen Medium, das eine Iridium-Precursorverbindung (z.B. eine Ir(III)- oder Ir(IV)-Verbindung) enthält, ein Iridiumoxid auf einem oxidischen Trägermaterial abgeschieden. Das Verfahren beinhaltet eine thermische Behandlung bei 300-800°C. Die Katalysatorzusammensetzung weist einen hohen Anteil an Iridium auf, was aus wirtschaftlicher Sicht nachteilig ist.

EP 2 608 297 A1 beschreibt ebenfalls ein Verfahren zur Herstellung einer geträgerten Iridium-haltigen Katalysatorzusammensetzung für die Wasserelektrolyse, bei dem Iridiumoxid nasschemisch unter alkalischen Bedingungen auf einem oxidischen Trägermaterial abgeschieden wird. Wiederum wird das Iridiumoxid-beladene Trägermaterial einer thermischen Behandlung bei 300-800°C unterzogen.

EP 2 608 298 A1 beschreibt einen Elektrokatalysator für Brennstoffzellen, der folgende Komponenten aufweist: (i) ein oxidisches Trägermaterial als Kern, (ii) eine auf dem Kern aufgebrachte Iridiumoxid-Beschichtung und (iii) ein katalytisch aktives Edelmetall wie z.B. Platin, das in Form von Nanopartikeln auf der Iridiumoxid-Beschichtung vorliegt. Den Beispielen ist entnehmbar, dass die Iridiumoxid-Beschichtung einer thermischen Behandlung bei 400°C unterzogen wird.

Für Polyelektrolytmembran-Brennstoffzellen ("PEM"-Brennstoffzellen) werden häufig Edelmetall-beladene Kohlenstoffmaterialien (z.B. ein metallisches Platin oder eine Platinlegierung, das bzw. die auf einem Kohlenstoffmaterial geträgert ist) als Katalysatorzusammensetzungen verwendet. Unter bestimmten Bedingungen, bei einer sogenannten Brenngasverarmung (engl.: "fuel starvation") kann es beim Betrieb einer PEM-Brennstoffzelle zu einer Zellenumpolung kommen. Im Normalbetrieb läuft an der Anodenseite der Brennstoffzelle die Wasserstoffoxidationsreaktion (HOR) ab:

$$2\ H_2 \rightarrow 4\ H^+ + 4\ e^-$$

Nach einer Zellenumpolung läuft die Zelle im Elektrolysebetrieb, wobei an der Anode eine Sauerstoffentwicklungsreaktion stattfindet:

$$2\ H_2O \rightarrow 4\ H^+ + O_2 + 4\ e^-$$

Weiterhin kann es gemäß folgender Gleichung zu einer Kohlenstoffkorrosion kommen:

$$C + 2\ H_2O \rightarrow CO_2 + 4\ H^+ + 4\ e^-$$

Durch die Oxidation des Kohlenstoffs kann das Trägermaterial signifikant und irreversibel geschädigt werden. Wenn allerdings neben dem herkömmlichen Brennstoffzellenkatalysator, der die Wasserstoffoxidationsreaktion katalysiert, noch ein weiterer Katalysator vorliegt, der im Fall der Zellenumpolung die Sauerstoffentwicklungsreaktion katalysiert, wird die Wasserelektrolyse gegenüber der Kohlenstoffkorrosion bevorzugt und die Schädigung des Kohlenstoff-basierten Trägermaterials wird verringert.

EP 2 575 202 A2 beschreibt die Herstellung eines Katalysators für eine Brennstoffzelle. Der Katalysator enthält metallische Edelmetallpartikel, wobei ein Element der Gruppe 13 des Periodensystems in das Kristallgitter des Edelmetalls eingebaut ist.

US 2011/223523 A1 beschreibt eine Katalysatorzusammensetzung, die ein Trägermaterial und auf diesem Trägermaterial vorliegende Iridiumoxidpartikel enthält.

DE 11 2010 005 334 T5 beschreibt die Herstellung eines Katalysators, der ein Trägermaterial und auf diesem Trägermaterial vorliegende Metallpartikel mit Kern-Hülle-Struktur enthält. Die Hülle wird aus einem Edelmetall gebildet, während im Kern ein im Vergleich zur Hülle weniger edles Metall vorliegt.

US 2011/081599 A1 beschreibt einen Katalysator für eine Brennstoffzelle, wobei der Katalysator (i) Palladium, (ii) Iridium und (iii) zumindest ein Metall M, ausgewählt aus Mn, Gd, In, Y, Zr, Sn, Cr und V, oder ein Oxid dieses Metall M, enthält.

DE 10 2017 114 030 A1 beschreibt ein Verfahren zur Beschichtung eines Separators mit Iridiumhydroxid durch Elektrophorese.

WO2018077857 offenbart die Verwendung von Iridiumhydroxidoxid, welches nachdem Trocken über 300C wärmebehandelt wird.

Eine Aufgabe der vorliegenden Erfindung ist die Bereitstellung einer Zusammensetzung, die eine hohe katalytische Aktivität hinsichtlich der Sauerstoffentwicklungsreaktion aufweist und sich daher als Katalysator auf der Anodenseite einer Wasserelektrolysezelle oder einer Brennstoffzelle nach einer Zellenumpolung eignet.

Gelöst wird die Aufgabe durch ein Verfahren zur Herstellung einer Katalysatorzusammensetzung, wobei

- in einem wässrigen Medium, das eine Iridiumverbindung enthält, bei einem pH-Wert ≥ 9 ein Iridium-haltiger Feststoff auf einem Trägermaterial abgeschieden wird,
- das mit dem Iridium-haltigen Feststoff beladene Trägermaterial aus dem wässrigen Medium abgetrennt und getrocknet wird,

wobei das mit dem Iridium-haltigen Feststoff beladene Trägermaterial in dem Verfahren keiner thermischen Behandlung bei einer Temperatur von mehr als 250°C über eine Zeitdauer von mehr als 1 Stunde unterzogen wird, wobei der nach dem Trocknen erhaltene Iridium-haltige Feststoff auf dem Trägermaterial ein Iridiumhydroxidoxid ist.

Bei dem erfindungsgemäßen Verfahren handelt es sich um ein nasschemisches Verfahren, dass einfach durchzuführen ist. In einem wässrigen Medium, in dem eine Iridiumverbindung gelöst vorliegt, wird unter alkalischen Bedingungen ein Iridium-haltiger Feststoff ausgefällt. In Anwesenheit eines Trägermaterials scheidet sich der Iridium-haltige Feststoff auf diesem Träger ab. Im Rahmen der vorliegenden Erfindung hat sich gezeigt, dass das mit dem Iridium-haltigen Feststoff beladene Trägermaterial eine sehr hohe elektrochemische Aktivität aufweist, wenn eine längere thermische Behandlung bei hoher Temperatur vermieden wird. Erfolgt also die Trocknung des beladenen Trägermaterials bei moderater Temperatur und wird auf eine anschließende Kalzinierung des Materials bei hoher Temperatur verzichtet oder zumindest die Zeitdauer der thermischen Behandlung bei höherer Temperatur relativ kurz gehalten, so zeigt dieses Material eine hohe katalytische Aktivität bei der Sauerstoffentwicklungsreaktion unter sauren Bedingungen und eignet sich daher hervorragend als Katalysator in der anodischen Seite einer PEM-Wasserelektrolysezelle oder einer PEM-Brennstoffzelle.

Geeignete Trägermaterialien, auf denen der Iridium-haltige Feststoff nasschemisch abgeschieden werden kann, sind dem Fachmann bekannt. Beispielsweise ist das Trägermaterial ein Oxid eines Übergangsmetalls (beispielsweise ein Titanoxid (z.B. $TiO_2$), ein Zirkonoxid (z.B. $ZrO_2$), ein Nioboxid (z.B. $Nb_2O_5$), ein Tantaloxid (z.B. $Ta_2O_5$) oder ein Ceroxid), ein Oxid eines Hauptgruppenmetalls (z.B. ein Zinnoxid wie $SnO_2$ oder ein Aluminiumoxid wie $Al_2O_3$), $SiO_2$ oder ein Kohlenstoffmaterial oder ein Gemisch aus zwei oder mehr der vorstehend genannten Trägermaterialien.

Bei dem Trägermaterial handelt es sich üblicherweise um ein pulverförmiges bzw. partikelförmiges Trägermaterial.

Das Trägermaterial weist beispielsweise eine spezifische BET-Oberfläche von weniger als 100 $m^2$/g, bevorzugt weniger als 60 $m^2$/g, noch bevorzugter weniger als 40 $m^2$/g auf. Beispielsweise beträgt die spezifische BET-Oberfläche des Trägermaterials 5-100 $m^2$/g, bevorzugter 10-60 $m^2$/g oder 10-40 $m^2$/g.

Geeignete Trägermaterialien sind kommerziell erhältlich oder lassen sich über herkömmliche Verfahren, die dem Fachmann bekannt sind, herstellen.

Bei oxidischen Trägern kann zur Verbesserung der elektrischen Leitfähigkeit das Oxid mit geeigneten Elementen dotiert sein. Beispielsweise kann das Zinnoxid Antimon enthalten ("*ATO*", englisch: *"antimony-doped tin oxide"*).

Handelt es sich bei dem Trägermaterial um ein Kohlenstoffmaterial, kann es bevorzugt sein, dass dieses Kohlenstoffmaterial einen recht hohen Graphitisierungsgrad aufweist. Dies erhöht die elektrische Leitfähigkeit und verbessert die Korrosionsbeständigkeit des Kohlenstoffmaterials. Eine Erhöhung des Graphitisierungsgrades eines Kohlenstoffmaterials wird beispielsweise durch eine geeignete thermische Behandlung realisiert. Dies ist dem Fachmann bekannt.

Beispielsweise weist das als Trägermaterial fungierende Kohlenstoffmaterial einen Graphitisierungsgrad von mindestens 60%, bevorzugter mindestens 63% (z.B. 60-90% oder 63-80%) auf.

Wie in EP 2 954 951 A1 beschrieben, wird der Graphitisierungsgrad g anhand der folgenden Formel (1) bestimmt:

$$g = (344pm-d002)/(344pm-335.4pm) \qquad (1)$$

wobei d002 der Graphit-Basalebenenabstand ist, der röntgenographisch anhand der Beugungslinie der (002)-Ebene des graphitisierten Kohlenstoffmaterials bestimmt wird.

Die Herstellung eines Kohlenstoff-basierten Trägermaterials mit hohem Graphitisierungsgrad wird beispielsweise in EP 2 954 951 A1 beschrieben.

Geeignete Kohlenstoff-basierte Trägermaterialien mit hohem Graphitisierungsgrad sind auch kommerziell erhältlich, beispielsweise unter der Bezeichnung Porocarb® von Heraeus.

Das Trägermaterial liegt dispergiert in dem wässrigen Medium vor.

Das wässrige Medium enthält eine Iridiumverbindung, die sich unter alkalischen Bedingungen als Iridium-haltiger Feststoff ausfällen lässt. Solche Iridiumverbindungen sind dem Fachmann bekannt. Bevorzugt handelt es sich um eine Iridium(IV)- oder eine Iridium(III)-Verbindung.

Geeignete Iridium(III)- oder Iridium(IV)-Verbindungen, die unter alkalischen Bedingungen in wässriger Lösung als Feststoff ausfallen, sind dem Fachmann bekannt. Beispielsweise ist die Iridium(III)- oder Iridium(IV)-Verbindung ein Salz (z.B. ein Iridiumhalogenid wie $IrCl_3$ oder $IrCl_4$; ein Salz, dessen Anion ein Chloro-Komplex $IrCl_6^{2-}$ ist; ein Iridiumnitrat oder ein Iridiumacetat) oder eine Iridium-haltige Säure wie z.B. $H_2IrCl_6$. In einer bevorzugten Ausführungsform enthält das wässrige Medium ein Iridium(IV)-halogenid, insbesondere Ir(IV)-chlorid.

Optional kann in dem wässrigen Medium auch noch eine Ruthenium(III)- und/oder Ruthenium(IV)-Verbindung vorliegen. Dies ermöglicht die Abscheidung eines Iridium-Ruthenium-Hydroxidoxids auf dem Trägermaterial. Sofern eine Ruthenium-Precursorverbindung im wässrigen Medium vorliegt, kann es sich beispielsweise um ein Ru(III)- oder Ru(IV)-Salz handeln, z.B. ein Halogenid-, Nitrat- oder Acetat-Salz.

Bevorzugt weist das wässrige Medium für die Abscheidung des Iridium-haltigen Feststoffs auf dem Trägermaterial einen pH-Wert ≥10, noch bevorzugter ≥11 auf. Beispielsweise weist das wässrige Medium einen pH-Wert von 9-14, bevorzugter 10-14 oder 11-14 auf.

Das wässrige Medium enthält üblicherweise Wasser in einem Anteil von mindestens 50 Vol%, bevorzugter mindestens 70 Vol% oder sogar mindestens 90 Vol%.

Für die Abscheidung des Iridium-haltigen Feststoffs auf dem Trägermaterial beträgt die Temperatur des wässrigen Mediums beispielsweise 40°C bis 100°C, bevorzugter 60°C bis 80°C.

Im Rahmen des erfindungsgemäßen Verfahrens kann beispielsweise das Trägermaterial in einem wässrigen Medium, das bereits eine oder mehrere Iridium(III)- und/oder Iridium(IV)-Verbindungen enthält, jedoch einen pH-Wert < 9 aufweist, dispergiert werden (z.B. bei Raumtemperatur). Anschließend wird der pH-Wert des wässrigen Mediums durch Zugabe einer Base auf einen Wert ≥ 9 erhöht und optional wird auch die Temperatur des wässrigen Mediums erhöht, bis sich über eine Ausfällungsreaktion ein Iridium-haltiger Feststoff auf dem Trägermaterial abscheidet. Alternativ ist es beispielsweise auch möglich, das Trägermaterial in einem wässrigen Medium, das noch keine Iridiumverbindungen enthält, zu dispergieren und erst nach der Einstellung eines geeigneten pH-Werts und optional einer bestimmten Fällungstemperatur eine Iridium(III)- und/oder Iridium(IV)-Verbindung dem wässrigen Medium zuzugeben.

Das Gewichtsverhältnis des Trägermaterials zu der Gesamtmenge an Iridium(III)und/oder Iridium(IV)-Verbindungen im wässrigen Medium wird beispielsweise so gewählt, dass das mit dem Iridium-haltigen Feststoff beladene Trägermaterial Iridium in einem Anteil von maximal 50 Gew%, bevorzugter maximal 45 Gew% enthält. Beispielsweise weist das beladene Trägermaterial einen Iridiumgehalt im Bereich von 10-50 Gew%, bevorzugter 15-45 Gew% auf.

Sofern in dem wässrigen Medium auch noch eine Ruthenium(III)- und/oder Ruthenium(IV)-Verbindung vorlag, enthält der durch die Fällung auf das Trägermaterial aufgebrachte Feststoff neben Iridium noch Ruthenium. Das atomare Verhältnis von Iridium zu Ruthenium kann beispielsweise im Bereich von 90/10 bis 10/90 liegen.

Die Abtrennung des mit dem Iridium-haltigen Feststoff beladenen Trägermaterials aus dem wässrigen Medium erfolgt über Methoden, die dem Fachmann bekannt sind (z.B. durch Filtration).

Das mit dem Iridium-haltigen Feststoff beladene Trägermaterial wird getrocknet. Der getrocknete Iridium-haltige Feststoff, der auf dem Trägermaterial vorliegt, ist ein Iridiumhydroxidoxid. Ein Iridiumhydroxidoxid enthält neben Oxid-Anionen auch noch Hydroxid-Anionen und lässt sich beispielsweise durch folgende Formel wiedergeben: $IrO(OH)x$; $1 \leq x < 2$.

Wie oben ausgeführt, wird das mit dem Iridium-haltigen Feststoff beladene Trägermaterial in dem erfindungsgemäßen Verfahren keiner thermischen Behandlung bei einer Temperatur von mehr als 250°C über eine Zeitdauer von mehr als 1 Stunde unterzogen.

Bevorzugt wird das mit dem Iridium-haltigen Feststoff beladene Trägermaterial in dem Verfahren keiner thermischen Behandlung bei einer Temperatur von mehr als 200°C über eine Zeitdauer von mehr als 30 Minuten unterzogen.

Beispielsweise wird das mit dem Iridium-haltigen Feststoff beladene Trägermaterial bei einer Temperatur von maximal 200°C getrocknet und nach dem Trocknen keiner weiteren thermischen Behandlung unterzogen.

Beispielsweise wird die Trocknung des mit dem Iridium-haltigen Feststoff beladenen Trägermaterials bei einer Temperatur und über eine Zeitdauer durchgeführt, so dass das nach der Trocknung auf dem Trägermaterial vorliegende Iridiumhydroxidoxid ein atomares Verhältnis von Iridium(IV) zu Iridium (III), bestimmt über Röntgenphotoelektronenspektroskopie (XPS), von maximal 1,7/1,0, bevorzugter maximal 1,5/1,0 aufweist. Die Trocknung des beladenen Trägermaterials erfolgt beispielsweise bei einer Temperatur ≤ 250°C, bevorzugter ≤ 200°C, noch bevorzugter ≤ 150°C.

Mit dem Begriff "Iridium(IV)" werden Iridium-Atome in der Oxidationsstufe +4 bezeichnet, während mit dem Begriff "Iridium(III)" Iridium-Atome in der Oxidationsstufe +3 bezeichnet werden.

Das nach der Trocknung erhaltene Iridiumhydroxidoxid weist beispielsweise ein atomares Iridium(IV)/Iridium(III)-Verhältnis im Bereich von 1,0/1,0 bis 1,7/1,0, bevorzugter von 1,2/1,0 bis 1,5/1,0 auf.

Bevorzugt enthält das Iridiumhydroxidoxid kein Iridium(0). Mit Iridium(0) wird ein Iridium in der Oxidationsstufe 0 bezeichnet. Bevorzugt liegt also auf dem Trägermaterial kein metallisches Iridium vor. Die Anwesenheit oder Abwesenheit von Iridium(0) lässt sich durch XPS verifizieren.

Optional kann das getrocknete Iridiumhydroxidoxid-beladene Trägermaterial in einem flüssigen Medium dispergiert werden, so dass eine Katalysator-haltige Tinte erhalten wird.

Geeignete flüssige Medien, die als Tinte für geträgerte Katalysatoren fungieren und für die Herstellung von Katalysator-beschichteten Elektroden in einer Elektrolysezelle (z.B. einer PEM-Elektrolysezelle für die Wasserelektrolyse) oder einer PEM-Brennstoffzelle verwendet werden können, sind dem Fachmann bekannt. Beispielsweise enthält die Tinte ein Ionomer (z.B. ein Polymer, das Sulfonsäuregruppe-haltige Monomere enthält) und einen oder mehrere kurzkettige Alkohole (z.B. Methanol, Ethanol oder n-Propanol oder ein Gemisch aus mindestens zwei dieser Alkohole).

Weiterhin betrifft die vorliegende Erfindung eine Katalysatorzusammensetzung, erhältlich nach dem oben beschriebenen Verfahren.

Die Katalysatorzusammensetzung enthält also ein Trägermaterial sowie ein auf dem Trägermaterial vorliegendes Iridiumhydroxidoxid. Hinsichtlich geeigneter Trägermaterialien und bevorzugter Eigenschaften des auf dem Trägermaterial vorliegenden Iridiumhydroxidoxids kann auf die obigen Ausführungen verwiesen werden.

Wie oben bereits erwähnt, kann es bevorzugt sein, dass das auf dem Trägermaterial vorliegende Iridiumhydroxidoxid ein atomares Verhältnis von Iridium(IV) zu Iridium (III), bestimmt über Röntgenphotoelektronenspektroskopie (XPS), von maximal 1,7/1,0, bevorzugter maximal 1,5/1,0 aufweist. Beispielsweise weist das Iridiumhydroxidoxid ein atomares Iridium(IV)/Iridium(III)-Verhältnis im Bereich von 1,0/1,0 bis 1,7/1,0, bevorzugter von 1,2/1,0 bis 1,5/1,0 auf.

Bevorzugt enthält das Iridiumhydroxidoxid kein Iridium(0). Mit Iridium(0) wird ein Iridium in der Oxidationsstufe 0 bezeichnet. Bevorzugt liegt also auf dem Trägermaterial kein metallisches Iridium vor. Die Anwesenheit oder Abwesenheit von Iridium(0) lässt sich durch XPS verifizieren.

Das auf dem Trägermaterial vorliegende Iridiumhydroxidoxid ist bevorzugt amorph, d.h. es zeigt keine Beugungsreflexe im Röntgendiffraktogramm.

Die Katalysatorzusammensetzung weist beispielsweise eine spezifische BET-Oberfläche von weniger als 100 $m^2/g$, bevorzugt weniger als 60 $m^2/g$, noch bevorzugter weniger als 40 $m^2/g$ auf. Beispielsweise beträgt die spezifische BET-Oberfläche der Katalysatorzusammensetzung 5-100 $m^2/g$, bevorzugter 10-60 $m^2/g$ oder 10-40 $m^2/g$.

Bevorzugt enthält die Katalysatorzusammensetzung außer Iridium und optional Ruthenium kein weiteres Edelmetall.

Weiterhin betrifft die vorliegende Erfindung eine Elektrolysezelle, insbesondere ein PEM-Elektrolysezelle für die Wasserelektrolyse, enthaltend die oben beschriebene erfindungsgemäße Katalysatorzusammensetzung.

Die erforderlichen Komponenten für den Aufbau einer PEM-Elektrolysezelle sind dem Fachmann bekannt. Das Polymerelektrolytmembran ("PEM") enthält beispielsweise ein Polymer, das Sulfonsäuregruppe-haltige Monomere aufweist.

Bevorzugt liegt die Katalysatorzusammensetzung in der Halbzelle vor, in der die Sauerstoffentwicklung erfolgt (d.h. auf der anodischen Seite der Elektrolysezelle).

Weiterhin betrifft die vorliegende Erfindung eine Brennstoffzelle, insbesondere ein PEM-Brennstoffzelle, enthaltend die oben beschriebene erfindungsgemäße Katalysatorzusammensetzung.

Die erforderlichen Komponenten für den Aufbau einer PEM-Brennstoffzelle sind dem Fachmann bekannt. Der Polymerelektrolytmembran ("PEM") enthält beispielsweise ein Polymer, das Sulfonsäuregruppe-haltige Monomere aufweist.

Bevorzugt liegt die Katalysatorzusammensetzung auf der anodischen Seite der Brennstoffzelle vor, beispielsweise zusammen mit einer herkömmlichen Katalysatorzusammensetzung, die ein Kohlenstoffmaterial als Trägermaterial und auf diesem Trägermaterial aufgebracht ein Edelmetall, insbesondere Platin oder Palladium, in Form eines elementaren Metalls oder einer Metalllegierung umfasst.

Weiterhin betrifft die vorliegende Erfindung die Verwendung der oben beschriebenen erfindungsgemäßen Katalysatorzusammensetzung als Katalysator für die Sauerstoffentwicklungsreaktion bei der Wasserelektrolyse.

Messmethoden

Folgende Messmethoden wurden im Rahmen der vorliegenden Erfindung verwendet:

Spezifische BET-Oberfläche

Die BET-Oberfläche wurde mit Stickstoff als Adsorbat bei 77 K gemäß der BET-Theorie bestimmt (Mehrpunkt-Methode, ISO 9277:2010).

Atomares Verhältnis von Ir(IV) zu Ir(III)

Die relativen Anteile der Ir-Atome der Oxidationsstufe +4 und der Oxidationsstufe +3 und damit das atomare Ir(IV)/Ir(III)-Verhältnis in dem geträgerten Iridiumhydroxidoxid wurden durch Röntgenphotoelektronenspektroskopie (XPS) bestimmt. Die Bestimmung dieses Verhältnis wird im Detailspektrum des Ir(4f) Dubletts (BE 75 - 55 eV, Al-k$\alpha$ Quelle) durch einen asymmetrischen Peakfit - Shirley Background, Gaus-Lorentz Mischung mit 30% Gaus-Anteil und einem Tailoringfaktor von 0.7 - durchgeführt. Darüber hinaus wird das Vorhandensein einer IrOH-Spezies im O(1s) Detailspektrum (BE ca. 531 eV, Al-k$\alpha$ Quelle) ebenfalls mittels eines asymmetrischen Peakfits (Shirley Background, Gaus-Lorentz Mischung mit 30% Gaus-Anteil) nachgewiesen. Eine entsprechende Vorgehensweise wird z.B. in Abbott et al., Chem. Mater, 2016, 6591-6604, beschrieben.

Über XPS-Analyse kann auch geprüft werden, ob Iridium(0) in der Zusammensetzung vorliegt.

Iridiumgehalt des Iridiumhydroxidoxid-beladenen Trägermaterials

Der Iridiumgehalt und, sofern anwesend, der Gehalt an Ruthenium werden über optische Emissionsspektrometrie mit induktiv gekoppeltem Plasma (ICP-OES) bestimmt.

Die vorliegende Erfindung wird anhand der nachfolgend beschriebenen Beispiele eingehender erläutert.

**Beispiele**

**Erfindungsgemäßes Beispiel 1 (EB1) und Vergleichsbeispiele 1-3 (VB1-VB3)**

In EB1 und VB1-VB3 wurde dasselbe Trägermaterial verwendet, nämlich ein $TiO_2$ mit einer spezifischen BET-Oberfläche von 60 m2/g.

Weiterhin erfolgte in EB1 und VB1-VB3 auf dieselbe Weise eine nasschemische Abscheidung eines bei alkalischem pH-Wert ausgefällten Iridium-haltigen Feststoffs auf dem $TiO_2$-Trägermaterial. Diese nasschemische Abscheidung wurde folgendermaßen durchgeführt:

124,56 g Iridium(IV)-chlorid ($IrCl_4$ Hydrat, Heraeus Deutschland GmbH & Co. KG) wurden in 4000 mL Wasser bei Raumtemperatur gelöst. Anschließend wurden 60,17 g $TiO_2$ (P25, Evonik, BET-Oberfläche: 60 m2/g) hinzugefügt. Durch Zugabe von NaOH wurde der pH auf 9,7 eingestellt. Das wässrige Medium wurde auf 70°C erwärmt und der pH wurde auf 11 eingestellt. Es wurde über Nacht bei 70°C gerührt. Der pH wurde auf 11 gehalten. Das mit dem Iridium-haltigen Feststoff beladene $TiO_2$-Trägermaterial wurde abfiltriert und gewaschen.

Nach der Abtrennung des mit dem Iridium-haltigen Feststoff beladenen Trägermaterials aus dem wässrigen Abscheidungsmedium erfolgten in EB1 und VB1-VB3 unterschiedliche thermische Behandlungen:
Die beladenen Trägermaterialien der Beispiele EB1 und VB1-VB3 hatten jeweils einen Irdiumgehalt von etwa 45 Gew%.

EB1:    Das beladene Trägermaterial wurde über Nacht bei 120°C getrocknet. Die XPS-Analyse zeigte, dass der auf dem Träger vorliegende getrocknete Iridiumhaltige Feststoff ein Iridiumhydroxidoxid ist.
VB1:    Das beladene Trägermaterial wurde 4 Stunden bei 300°C erhitzt.
VB2:    Das beladene Trägermaterial wurde 4 Stunden bei 360°C erhitzt.
VB3:    Das beladene Trägermaterial wurde 4 Stunden bei 400°C erhitzt.

Für die in EB1 und VB1-VB3 erhaltenen Katalysatorzusammensetzungen wurde jeweils die elektrochemische Aktivität (in mA pro mg Iridium) hinsichtlich der Sauerstoffentwicklungsreaktion bei der Wasserelektrolyse bestimmt. Die Aktivitätsbestimmung erfolgte in elektrochemischen Messungen der rotierenden Scheibenelektrode.

Diese elektrochemische Charakterisierung fand im Drei-Elektroden-Aufbau statt mit einem Graphitstab als Gegenelektrode, einer gesättigten Kalomelelektrode als Referenzelektrode (alle Potentiale wurden auf die RHE umgerechnet) und den Katalysatormaterialien der Beispiele EB1 und VB1-VB3, die jeweils als dünner Film auf einem Glaskohlensubstrat als Arbeitselektrode vorlagen (Beladungsgrad: 100 $\mu g/cm^2$). Die Messungen fanden bei 60° in 0,5 M H2SO4 unter Luft bei einer Rotationsgeschwindigkeit von 1600 U/m statt. Die Aktivitätswerte wurden unter Berücksichtigung der Hysterese aus anodischem und kathodischen Potentiallauf bei 1,5 $V_{RHE}$ bestimmt.

Tabelle 1 zeigt die Ergebnisse dieser Messungen.

Tabelle 1: Elektrochemische Aktivität

| | Thermische Behandlung des beladenen Trägermaterials | Elektrochemische Aktivität [mA/g Ir] |
|---|---|---|
| Erfindungsgemäßes Beispiel EB1 | 120°C | 660 |
| Vergleichsbeispiel VB1 | 300°C | 470 |
| Vergleichsbeispiel VB2 | 360°C | 420 |
| Vergleichsbeispiel VB3 | 400°C | 310 |

Die Ergebnisse zeigen, dass das mit dem Iridium-haltigen Feststoff beladene Trägermaterial eine sehr hohe elektrochemische Aktivität aufweist, wenn eine thermische Behandlung bei hoher Temperatur vermieden wird. Erfolgt also die Trocknung des beladenen Trägermaterials bei moderater Temperatur und wird auf eine anschließende Kalzinierung des Materials bei hoher Temperatur verzichtet, so zeigt dieses Material eine hohe katalytische Aktivität bei der Sauerstoffentwicklungsreaktion unter sauren Bedingungen und eignet sich daher hervorragend als Katalysator in der anodischen Seite einer PEM-Wasserelektrolysezelle oder einer PEM-Brennstoffzelle.

**Erfindungsgemäßes Beispiel 2 (EB2)**

In EB2 wurde anstelle von $TiO_2$ ein poröses Kohlenstoffmaterial (Porocarb®, Heraeus) als Trägermaterial verwendet. Die Mengenverhältnisse zwischen der Iridiumausgangsverbindung und dem Trägermaterial wurden so gewählt, dass ein beladenes Trägermaterial mit einem Iridiumgehalt von etwa 30 Gew% resultiert. Ansonsten erfolgte die Abscheidung des Iridium-haltigen Feststoffs auf dem Trägermaterial unter den gleichen Bedingungen wie in EB1.

Nach der Abtrennung aus dem wässrigen Abscheidungsmedium wurde das beladene Trägermaterial bei 120°C getrocknet. Eine nachgeschaltete thermische Behandlung bei höheren Temperaturen erfolgte nicht. Die XPS-Analyse zeigt, dass der auf dem Träger vorliegende getrocknete Iridium-haltige Feststoff ein Iridiumhydroxidoxid ist.

Das bei 120°C getrocknete Iridiumhydroxidoxid-beladene Kohlenstoffmaterial wurde der oben beschriebenen elektrochemischen Aktivitätsmessung unterzogen. Es wurde eine Aktivität von 625 mA / g Iridium gemessen. Somit zeigt sich auch bei Verwendung eines Kohlenstoff-basierten Trägermaterials anstelle eines oxidischen Trägermaterials eine sehr hohe elektrochemische Aktivität hinsichtlich der Sauerstoffentwicklungsreaktion, wenn auf eine thermische Nachbehandlung bei hoher Temperatur verzichtet wird.

**Patentansprüche**

1. Ein Verfahren zur Herstellung einer Katalysatorzusammensetzung, wobei

   - in einem wässrigen Medium, das eine Iridiumverbindung enthält, bei einem pH-Wert $\geq$ 9 ein Iridium-haltiger Feststoff auf einem Trägermaterial abgeschieden wird,
   - das mit dem Iridium-haltigen Feststoff beladene Trägermaterial aus dem wässrigen Medium abgetrennt und getrocknet wird,

   wobei das mit dem Iridium-haltigen Feststoff beladene Trägermaterial in dem Verfahren keiner thermischen Behandlung bei einer Temperatur von mehr als 250°C über eine Zeitdauer von mehr als 1 Stunde unterzogen wird **dadurch gekennzeichnet, dass** der nach dem Trocknen erhaltene Iridium-haltige Feststoff auf dem Trägermaterial ein Iridiumhydroxidoxid ist.

2. Das Verfahren nach Anspruch 1, wobei das Trägermaterial ein Oxid eines Übergangsmetalls, ein Oxid eines Hauptgruppenmetalls, $SiO_2$ oder ein Kohlenstoffmaterial ist; und/oder das Trägermaterial eine spezifische BET-Oberfläche von weniger als 100 $m^2$/g aufweist.

3. Das Verfahren nach Anspruch 2, wobei das Übergangsmetalloxid ein Titanoxid, ein Zirkonoxid, ein Nioboxid, ein Tantaloxid oder ein Ceroxid, bevorzugt $TiO_2$ ist.

4. Das Verfahren nach Anspruch 2, wobei das als Trägermaterial fungierende Kohlenstoffmaterial einen Graphitisierungsgrad von mindestens 60% aufweist.

5. Das Verfahren nach einem der vorstehenden Ansprüche, wobei die in dem wässrigen Medium vorliegende Iridiumverbindung eine Iridium(IV)- oder eine Iridium(III)-Verbindung ist.

6. Das Verfahren nach Anspruch 5, wobei die Iridium(IV)- oder Iridium(III)-Verbindung ein Salz, insbesondere ein Iridiumhalogenid, ein Salz, dessen Anion ein Chloro-Komplex $IrCl_6^{2-}$ ist; ein Iridiumnitrat oder ein Iridiumacetat, oder eine Iridium-haltige Säure ist.

7. Das Verfahren nach einem der vorstehenden Ansprüche, wobei das wässrige Medium für die Abscheidung des Iridium-haltigen Feststoffs auf dem Trägermaterial einen pH-Wert $\geq$10, noch bevorzugter $\geq$11 aufweist; und/oder die Temperatur des wässrigen Mediums für die Abscheidung des Iridium-haltigen Feststoffs auf dem Trägermaterial 40°C bis 100°C beträgt.

8. Das Verfahren nach einem der vorstehenden Ansprüche, wobei das mit dem Iridium-haltigen Feststoff beladene Trägermaterial in dem Verfahren keiner thermischen Behandlung bei einer Temperatur von mehr als 200°C über eine Zeitdauer von mehr als 30 Minuten unterzogen wird.

9. Das Verfahren nach einem der vorstehenden Ansprüche, wobei das mit dem Iridium-haltigen Feststoff beladene Trägermaterial bei einer Temperatur von maximal 200°C getrocknet wird und nach dem Trocknen keiner weiteren thermischen Behandlung unterzogen wird.

10. Das Verfahren nach einem der vorstehenden Ansprüche, wobei das Iridiumhydroxidoxid-beladene Trägermaterial Iridium in einem Anteil von maximal 50 Gew% enthält; und/oder das auf dem Trägermaterial vorliegende Iridiumhydroxidoxid ein atomares Verhältnis von Iridium(IV) zu Iridium (III), bestimmt über Röntgenphotoelektronenspektroskopie (XPS), von maximal 1,7/1,0 aufweist.

11. Das Verfahren nach einem der vorstehenden Ansprüche, wobei das mit dem Iridium-haltigen Feststoff beladene Trägermaterial nach dem Trocknen in einem flüssigen Medium unter Erhalt einer Katalysator-haltigen Tinte dispergiert wird.

12. Eine Katalysatorzusammensetzung, erhältlich nach dem Verfahren gemäß einem der Ansprüche 1-11.

13. Eine Elektrolysezelle, insbesondere eine PEM-Elektrolysezelle, enthaltend die Katalysatorzusammensetzung gemäß Anspruch 12.

14. Eine Brennstoffzelle, insbesondere eine PEM-Brennstoffzelle, enthaltend die Katalysatorzusammensetzung gemäß Anspruch 12.

15. Verwendung der Katalysatorzusammensetzung nach Anspruch 12 als Katalysator für die Sauerstoffentwicklungsreaktion bei der Wasserelektrolyse.

## Claims

1. A method for preparing a catalyst composition, wherein

   - in an aqueous medium containing an iridium compound, an iridium-containing solid is deposited on a support material at a pH $\geq$ 9,
   - the support material loaded with the iridium-containing solid is separated from the aqueous medium and dried,

   wherein, in the method, the support material loaded with the iridium-containing solid is not subjected to a thermal treatment at a temperature of more than 250°C for a period of more than 1 hour,
   **characterized in that**
   the iridium-containing solid obtained on the support material after drying is an iridium hydroxide oxide.

2. The method according to Claim 1, wherein the support material is an oxide of a transition metal, an oxide of a main group metal, $SiO_2$ or a carbon material; and/or the support material has a specific BET surface area of less than 100 $m^2/g$.

3. The method according to Claim 2, wherein the transition metal oxide is a titanium oxide, a zirconium oxide, a niobium oxide, a tantalum oxide, or a cerium oxide, preferably $TiO_2$.

4. The method according to Claim 2, wherein the carbon material functioning as the support material has a degree of graphitization of at least 60%.

5. The method according to any one of the preceding claims, wherein the iridium compound present in the aqueous medium is an iridium(IV) or an iridium(III) compound.

6. The method according to Claim 5, wherein the iridium(IV) or iridium(III) compound is a salt, in particular an iridium halide, a salt of which the anion is a chloro complex $IrCl_6^{2-}$ ; an iridium nitrate or an iridium acetate; or an acid containing iridium.

7. The method according to any one of the preceding claims, wherein the aqueous medium for the deposition of the iridium-containing solid on the support material has a pH $\geq$10, more preferably $\geq$11; and/or the temperature of the aqueous medium for the deposition of the iridium-containing solid on the support material is from 40°C to 100°C.

8. The method according to any one of the preceding claims, wherein, in the method, the support material loaded with the iridium-containing solid is not subjected to a thermal treatment at a temperature of more than 200°C for a period of more than 30 minutes.

9. The method according to any one of the preceding claims, wherein the support material loaded with the iridium-containing solid is dried at a temperature of at most 200°C and is not subjected to any further thermal treatment after drying.

10. The method according to any one of the preceding claims, wherein the iridium hydroxide oxide-loaded support material contains iridium in a proportion of at most 50 wt.%; and/or the iridium hydroxide oxide present on the support material has an atomic ratio of iridium(IV) to iridium(III), as determined by X-ray photoelectron spectroscopy (XPS), of at most 1.7/1.0.

11. The method according to any one of the preceding claims, wherein the support material loaded with the iridium-containing solid is dispersed in a liquid medium after drying to obtain a catalyst-containing ink.

12. A catalyst composition obtainable according to the method according to any one of Claims 1-11.

13. An electrolysis cell, in particular a PEM electrolysis cell, containing the catalyst composition according to Claim 12.

14. A fuel cell, in particular a PEM fuel cell, containing the catalyst composition according to Claim 12.

15. A use of the catalyst composition according to Claim 12 as a catalyst for the oxygen evolution reaction in water electrolysis.


**Revendications**

1. Procédé pour la production d'une composition catalytique, dans lequel

- dans un milieu aqueux, qui contient un composé d'iridium, à une valeur de pH $\geq$ 9, un solide contenant de l'iridium est déposé sur une matière de support,
- la matière de support chargée du solide contenant de l'iridium est séparée du milieu aqueux et séchée,

la matière de support chargée du solide contenant de l'iridium n'étant pas soumise dans le procédé à un traitement thermique à une température supérieure à 250 °C pendant une durée supérieure à 1 heure, **caractérisé en ce que** le solide contenant de l'iridium obtenu après le séchage sur la matière de support est un oxyde d'hydroxyde d'iridium.

2. Procédé selon la revendication 1, dans lequel la matière de support est un oxyde d'un métal de transition, un oxyde d'un métal d'un groupe principal, du $SiO_2$ ou un matériau de carbone ; et/ou la matière de support présente une surface spécifique BET inférieure à 100 $m^2/g$.

3. Procédé selon la revendication 2, dans lequel l'oxyde de métal de transition est un oxyde de titane, un oxyde de zirconium, un oxyde de niobium, un oxyde de tantale ou un oxyde de cérium, de préférence un $TiO_2$.

4. Procédé selon la revendication 2, dans lequel le matériau de carbone servant de matière de support présente un degré de graphitisation d'au moins 60 %.

5. Procédé selon l'une quelconque des revendications précédentes, dans lequel le composé d'iridium présent dans le milieu aqueux est un composé d'iridium(IV) ou un composé d'iridium(III).

6. Procédé selon la revendication 5, dans lequel le composé d'iridium(IV) ou d'iridium(III) est un sel, en particulier un halogénure d'iridium, un sel dont l'anion est un chloro complexe $IrCl_6^{2-}$, un nitrure d'iridium ou un acétate d'iridium, ou un acide contenant de l'iridium.

7. Procédé selon l'une quelconque des revendications précédentes, dans lequel le milieu aqueux présente, pour le dépôt du solide contenant de l'iridium sur la matière de support, une valeur de pH $\geq$ 10, encore plus préférable $\geq$ 11 ; et/ou la température du milieu aqueux se situe dans la plage de 40 °C à 100 °C pour le dépôt du solide contenant de l'iridium sur la matière de support.

8. Procédé selon l'une quelconque des revendications précédentes, dans lequel la matière de support chargée du solide contenant de l'iridium n'étant pas soumise dans le procédé à un traitement thermique à une température supérieure à 200 °C pendant une durée supérieure à 30 minutes.

9. Procédé selon l'une quelconque des revendications précédentes, dans lequel la matière de support chargée du solide contenant de l'iridium est séchée à une température de 200 °C maximum et n'est soumise à aucun autre traitement thermique après le séchage.

10. Procédé selon l'une quelconque des revendications précédentes, dans lequel la matière de support chargée d'oxyde d'hydroxyde d'iridium contient de l'iridium dans une proportion d'au plus 50 % en poids ; et/ou l'oxyde d'hydroxyde d'iridium présent sur la matière de support présente un rapport atomique de l'iridium(IV) à l'iridium(III), déterminé par une spectroscopie photoélectronique aux rayons X (XPS), d'au maximum 1,7/1,0.

11. Procédé selon l'une quelconque des revendications précédentes, dans lequel la matière de support chargée du solide contenant de l'iridium est dispersée après le séchage dans un milieu liquide pour obtenir une encre contenant un catalyseur.

12. Composition catalytique pouvant être obtenue par le procédé selon l'une quelconque des revendications 1 à 11.

13. Cellule d'électrolyse, en particulier cellule d'électrolyse PEM, contenant la composition catalytique selon la revendication 12.

14. Pile à combustible, en particulier pile à combustible PEM, contenant la composition catalytique selon la revendication 12.

15. Utilisation de la composition catalytique selon la revendication 12 comme catalyseur pour la réaction de dégagement d'oxygène lors de l'électrolyse de l'eau.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005049199 A1
- EP 2608297 A1
- EP 2608298 A1
- EP 2575202 A2
- US 2011223523 A1
- DE 112010005334 T5
- US 2011081599 A1
- DE 102017114030 A1
- WO 2018077857 A
- EP 2954951 A1

**In der Beschreibung aufgeführte Nicht-Patentliteratur**

- **M. CARMO et al.** *International Journal of Hydrogen Energy,* 2013, vol. 38, 4901-4934
- **V. HIMABINDU et al.** *Materials Science for Energy Technologies,* 2019, vol. 2, 442-454
- **P. STRASSER et al.** *Adv. Energy Mater.,* 2017, vol. 7, 1601275
- **F.M. SAPOUNTZI et al.** *Progress in Energy and Combustion Science,* 2017, vol. 58, 1-35
- **ABBOTT et al.** *Chem. Mater,* 2016, 6591-6604